# EUROPÄISCHE PATENTSCHRIFT

(11) **EP 2 353 934 B1**
(45) Veröffentlichungstag und Bekanntmachung des Hinweises auf die Patenterteilung: **11.09.2013**
(21) Anmeldenummer: 10152318.1
(22) Anmeldetag: 01.02.2010
(51) Int. Cl.: B60P 7/08

(54) **Spannratsche und ein solche Spannratsche umfassendes Anschlagmittel**
Ratchet tensioner and lifting accessories comprising same
Tendeur cliquet et accessoire d'élingage comportant un tel tendeur cliquet

(43) Veröffentlichungstag der Anmeldung: 10.08.2011
(73) Patentinhaber: Spanset Inter AG, 8832 Wollerau (CH)
(72) Erfinder: Schmitz, Ralf, 52477 Alsdorf (DE); Burbach, Ingo, 52538 Gangelt (DE); Klein, Peter, 52134 Herzogenrath (DE); Mamié, André, 8820 Wädenswil (CH)
(74) Vertreter: Cohausz & Florack

(56) Entgegenhaltungen:
- DE-B1- 2 717 157
- DE-C1- 19 839 245
- US-A- 3 749 366
- US-A- 4 823 443
- US-B1- 6 524 041

## Beschreibung

Spannratschen werden eingesetzt, um einen Spanngurt, welcher zum Festlegen an einem oder mehreren Anschlagpunkten oder Zusammenhalten um ein zu transportierendes Gut gelegt wird, so zu spannen, dass das von dem Spanngurt gehaltene Gut auch unter den beim Transport auftretenden dynamischen Kräften sicher gehalten ist.

Ein Grundproblem bei der Handhabung von mit einer solchen Spannratsche ausgestatteten Anschlagmitteln besteht dabei darin, dass der Spanngurt einerseits um das jeweilige Gut oder die für dessen Befestigung verwendeten Anschlagpunkte gelegt werden muss und andererseits mit seinem einen Endabschnitt mit der Wickelwelle und mit seinem anderen Endabschnitt mit den Bolzenelementen so verkoppelt werden muss, dass dort jeweils eine dauerhaft feste Verbindung gewährleistet ist.

Üblicherweise ist dazu eines der Endabschnitte des Spanngurts unter Ausbildung einer Öse um einen von der Konsole der Spannratsche getragenen, durch die Öse greifenden Bolzen gelegt und mit dem Spanngurt fest vernäht. Auf diese Weise ist dieses so genannte "Festende" des Spanngurts fest und unverlierbar mit der Spannratsche verbunden. Nachteilig ist dabei, dass die Anpassung der wirksamen Länge des Spanngurts an den Umfang des zu transportierenden Guts bzw. die örtlichen Gegebenheiten alleine über den Endabschnitt erfolgen kann, der nach dem Umschlingen des Guts oder des jeweiligen Anschlagmittels in die Wickelwelle eingefädelt wird.

Um eine größere Variabilität bei der Einstellung der wirksamen Länge des Spanngurts zu ermöglichen, ist in der DE 28 45 227 A1 eine Spannratsche vorgeschlagen worden, die in Übereinstimmung mit einer erfindungsgemäßen Spannratsche eine Konsole, eine in der Konsole drehbar gelagerte Wickelwelle zum Aufwickeln des mit seinem einen Endabschnitt mit der Wickelwelle verbindbaren Spanngurts, einen Spannhebel zum Drehen der Wickelwelle um eine Drehachse und zwei parallel und beabstandet zueinander an der Konsole angeordnete, in einem festen Abstand zueinander positionierte Bolzenelemente aufweist, um die der ihnen zugeordnete Endabschnitt des Spanngurts schlaufbar ist.

Bei der voranstehend erläuterten bekannten Spannratsche sind die Bolzenelemente achsparallel zur Wickelwelle ausgerichtet. Dabei ist der näher zur Wickelwelle angeordnete Bolzen halbzylindrisch mit einem der Wickelwelle zugewandten, nach außen gewölbten Umfangsflächenabschnitt und einem dem zylindrisch geformten anderen Bolzen zugeordneten ebenen Umfangsflächenabschnitt ausgebildet. Auf diese Weise ist zwischen den betreffenden Umfangsabschnitten ein vergleichbar scharfkantiger Übergangsbereich ausgebildet. Beim Spannen mittels der Spannratsche wird dann der um die Bolzenelemente liegende Endabschnitt des Spanngurts so zusammengezogen, dass seine aufeinander liegenden Lagen unter Selbsthemmung ein selbsttätiges Verrutschen des Endabschnitts verhindern. An dem spitzen Übergangsbereich des halbzylindrischen Bolzens treten dabei erhöhte Spannungen in den auf ihm liegenden Lagen des Spanngurts und dementsprechend hohe Reibkräfte auf, die die Selbsthemmung zusätzlich verstärken.

In der Praxis erweist sich die auf diese Weise erzeugte Klemmung des Spanngurts zwischen den Bolzenelementen insofern als nachteilig, als es unter den vor Ort in der Regel herrschenden rauen Bedingungen oft nur schwer möglich ist, nach einmal erfolgter Verspannung des Spanngurts dessen Länge nachzujustieren. Zwar lässt sich durch ein Lösen der Spannratsche der Spanngurt lockern. Die im Bereich der Bolzenelemente zwischen den Lagen des Spanngurts in Folge von Reib- bzw. Klemmkräften herrschende Selbsthemmung ist jedoch in der Regel so groß, dass sie nur mit erheblichem Kraftaufwand oder unter Verwendung von Hilfsmitteln gelöst werden kann, die zu einer Beschädigung des Gurts führen können.

Ein weiterer Nachteil der voranstehend erläuterten Spannratsche besteht in der Praxis darin, dass sie unter Last einem Torsionsmoment ausgesetzt ist. Durch dieses Moment richtet sich die Ratsche im Zuge des Verspannens des Spanngurts so aus, dass die Wirklinien der über die mit der Spannratsche verkoppelten Endabschnitte des Zurrgurts eingeleiteten Zugkräfte fluchtend zueinander ausgerichtet sind. Infolgedessen nimmt der Umschlingungswinkel im Bereich des im Querschnitt halbmondförmigen, benachbart zur Wickelwelle angeordneten Bolzenelements so weit ab, dass dort kein ordnungsgemäßer Reibschluss der aufeinanderliegenden Lagen des Spanngurts mehr gewährleistet ist. Im Fall, dass die selbsttätige Ausrichtung der Spannratsche verhindert wird, steigen die in ihrer Konsole herrschenden Kräfte so stark an, dass es zu einer Verformung der Konsole kommen kann. Diese Gefahr besteht insbesondere dann, wenn die Konsole aus Kostengründen aus dünnen vorgestanzten Blechstreifen gefertigt werden soll.

Ein Nachjustieren von mittels Spannratschen verspannten Spanngurten ist erfahrungsgemäß bei langen Transporten erforderlich, bei denen das zu transportierende Gut und mit ihm die zu seiner Befestigung verwendeten Spanngurte wechselnden Belastungen ausgesetzt sind. Diese Belastungen können dazu führen, dass sich die Verspannung lockert. Daher ist eine regelmäßige Kontrolle und gegebenenfalls ein Nachspannen der Befestigung erforderlich.

Um dies möglichst einfach zu gestalten, sind verschiedene Vorschläge gemacht worden. Deren gemeinsames Kennzeichen ist, dass mindestens eines der zum Verkoppeln des einen Endes des Spanngurts vorgesehenen Bolzenelemente lose an der Konsole der Spannratsche gelagert ist, so dass er zum Lösen des betreffenden Endes des Spanngurts aus einer Halte- in eine Löseposition gebracht werden kann. Derartige Spannratschen sind beispielsweise in der EP 1 266 797 A2 oder der US 2 997 761 A1 beschrieben.

Daneben ist in der EP 0 634 305 A1 vorgeschlagen worden, die Klemmung nicht durch eine Umschlaufung zweier Bolzenelemente, sondern mit Hilfe eines Riegelelements vorzunehmen, dass aus einer selbsthemmenden Klemmstellung manuell mittels entsprechendem Krafteinsatz in eine Lösestellung schwenkbar ist.

In vergleichbarer Weise ist eine aus DE 198 39 245 C1 bekannte Spannvorrichtung für Gurte mit einer Entriegelungseinrichtung ausgestattet. Die Entriegelungseinrichtung erlaubt es, ein Klemmelement, durch welches die Welle, auf der der Gurt im gespannten Zustand gewickelt ist, verriegelt ist, in eine Lösestellung zu bringen, in der der Gurt in einem gewissen Maße gelockert ist. Auf diese Weise ist eine Überprüfung des Gurts möglich.

Unabhängig davon, ob ein loses Bolzenelement oder ein zusätzliches Klemmelement vorgesehen ist, haben sich die voranstehend erwähnten Vorschläge in der Praxis in Anwendungsfällen, in denen die Befestigung des jeweils zu transportierenden Guts dynamisch wechselnden Kräften ausgesetzt ist, nicht durchgesetzt, weil sie einerseits umständlich zu bedienen und andererseits nicht mit der notwendigen Sicherheit die Verbindung zwischen der Spannratsche und dem Spanngurt sichern.

Vor dem Hintergrund des voranstehend erläuterten Standes der Technik bestand die Aufgabe der Erfindung darin, eine auf kostengünstige Weise herstellbare Spannratsche und ein mit einer solchen Spannratsche ausgestattetes Anschlagmittel zu schaffen, die bei einfacher Handhabung auch unter hohen Belastungen eine dauerhaft sichere Befestigung des jeweils zu transportierenden Guts erlauben.

Diese Aufgabe ist in Bezug auf eine Spannratsche der eingangs angegebenen Art erfindungsgemäß dadurch gelöst worden, dass eine solche Spannratsche gemäß Anspruch 1 ausgebildet ist.

In Bezug auf das Anschlagmittel besteht die Lösung der oben angegebenen Aufgabe erfindungsgemäß darin, dass ein solches Anschlagmittel die in Anspruch 12 angegebenen Merkmale aufweist.

Vorteilhafte Ausgestaltungen der Erfindung sind in den abhängigen Ansprüchen angegeben und werden nachfolgend erläutert.

Bei der erfindungsgemäßen Spannratsche zum Spannen eines Spanngurts sind die bei einer konventionellen Spannratsche der eingangs erläuterten Art zum Einschlaufen des einen Endabschnitts des jeweiligen Spanngurts vorhandenen Bolzenelemente von einem Adapter getragen, der um eine achsparallel zur Wickelwelle der Spannratsche ausgerichtete Schwenkachse verschwenkbar mit der Konsole verbunden ist.

Über ihre gelenkige Verbindung sind Adapter und Konsole der erfindungsgemäßen Spannratsche hinsichtlich der um die Schwenkachse der gelenkigen Verbindung wirksamen Momente voneinander entkoppelt. Auf diese Weise können Konsole und Adapter sich unabhängig voneinander so ausrichten, wie es die auf sie über den mit ihnen jeweils verkoppelten Endabschnitt des Zurrgurtes wirkenden Kräfte vorgeben. Übermäßige Belastungen der Konsole werden auf diese Weise sicher vermieden. So kann die erfindungsgemäße Ratsche trotz des Umstandes, dass im Bereich der Bolzenelemente in Folge der über den dort eingeschlauften Endabschnitt des Spanngurts eingetragenen Kräfte ein Moment entsteht, ohne die Gefahr einer Materialüberlastung sehr hohe Spannkräfte ertragen.

Eine erste Möglichkeit, bei einer erfindungsgemäßen Spannratsche im praktischen Einsatz im Bereich der Bolzenelemente einen optimalen Umschlingungsgrad durch den dem Adapter zugeordneten Endabschnitt des Spanngurts zu gewährleisten, besteht darin, dass der Adapter einen Verbindungsabschnitt, über den der Adapter mit der Konsole verkoppelt ist, und einen Tragabschnitt aufweist, an dem die Bolzenelemente befestigt sind, wobei gleichzeitig der Verbindungsabschnitt und der Tragabschnitt so zueinander angewinkelt ausgerichtet sind, dass die Ebene, in denen die Achsen der Bolzenelemente gemeinsam liegen, sich von der Ebene unterscheidet, in der die Schwenkachse des Adapters und die Wickelwelle gemeinsam liegen. Typischerweise schließen dazu der Verbindungsabschnitt und der Tragabschnitt des Adapters in einer Projektion auf eine Normalebene zur Schwenkachse des Adapters gesehen einen stumpfen Winkel ein.

Durch die winklige Anordnung von Verbindungsabschnitt und Tragabschnitt sind Wickelwelle, Schwenkachse und Achsen der Bolzenelemente der erfindungsgemäßen Spannpratze sowohl im unverspannten als auch im verspannten Zustand in zwei oder mehr Ebenen versetzt zueinander positioniert. Auf diese Weise ist es möglich, die Bolzenelemente des Adapters in Bezug auf die Schwenkachse bzw. Wickelwelle so anzuordnen, dass der Adapter in Folge der im verspannten Zustand auf ihn wirkenden Zugkräfte selbsttätig in eine Position schwenkt, in der die Wirklinie der auf die Spannratsche wirkenden Zugkräfte jeweils parallel zur Richtung der Längserstreckung der Konsole ausgerichtet sind. Die Konsole ist daraufhin weitestgehend reiner Zugbelastung unterworfen, die von ihr auch dann problemlos aufgenommen werden kann, wenn sie aus einem einfachen Blechmaterial hergestellt ist.

Neben der optimalen Ausrichtung der Kräfte hat die voranstehend erläuterte Ausgestaltung der Erfindung den Vorteil, dass im verspannten Zustand der vom Adapter weggeführte Teil des Zurrgurts jeweils flach auf den Bolzenelementen aufliegt und auf diese Weise eine den sicheren Halt gewährleistende optimale Umschlingung der Bolzenelemente sichergestellt ist.

Das Einschlaufen des dem Adapter zugeordneten Endabschnitts des Zurrgurts kann dadurch vereinfacht werden, dass an der Konsole ein Anschlag vorgesehen ist, der den Schwenkbereich des Adapters begrenzt. Der Anschlag kann darüber hinaus auch dazu genutzt werden, den Adapter in eine Position zu zwingen, in denen eine optimale Umschlingung der Bolzenelemente unter normalen Betriebsbedingungen gewährleistet ist.

Der voranstehend genannte Anschlag kann beispielsweise in Form einer Raste ausgebildet sein, die während des Einschlaufens den Adapter in einer in Bezug auf die Konsole der Spannratsche festen Einschlaufposition durch Klemmkraft hält, die unter den im verspannten Zustand wirkenden Zugkräften und den damit einhergehend wirkenden Momenten jedoch ohne Weiteres überwunden werden kann. Ebenso ist es möglich, den Anschlag so auszubilden, dass er einerseits nur eine begrenzte bis gar keine Beweglichkeit des Adapters in Bezug auf die Konsole der Spannratsche erlaubt, andererseits aber im Fall ungünstiger Einsatzbedingungen zum Schutz vor Überlastung der Spannratsche nach Art einer Sollbruchstelle überwunden werden kann, wenn die an ihm auftretenden Kräfte so hoch werden, dass sie die Formstabilität der Konsole der Spannratsche gefährden könnten. Die erfindungsgemäß gelenkige Verbindung zwischen Konsole und Adapter gewährleistet dabei auch dann noch eine sichere Funktion der Spannratsche, wenn der jeweilige Anschlag aufgrund hoher wirksamer Kräfte überwunden ist und den Adapter nicht mehr abstützt.

Eine alternative Möglichkeit, bei einer erfindungsgemäßen Spannratsche die Vorteile der schwenkbeweglichen Verkopplung von Adapter und Konsole zu nutzen und gleichzeitig einen optimal sicheren Halt des mit dem Adapter verschlauften Endes des Spanngurtes zu gewährleisten, besteht darin, dass an dem von der Schwenkachse abgewandten Ende des Adapters ein Stützbolzen vorgesehen ist, der sich achsparallel zu den Bolzenelementen erstreckt und mit der Schwenkachse den Raum seitlich begrenzt, in dem die Bolzenelemente angeordnet sind. An dem Steg lässt sich der Spanngurt so umlenken, dass unabhängig von der Form des Adapters und seiner Ausrichtung eine maximale Umschlingung der Bolzenelemente und damit ein optimaler Halt des um die Bolzenelemente geschlauften Endabschnitts des Spanngurtes gewährleistet sind.

Aufgrund dessen, dass bei einer erfindungsgemäßen Spannratsche der Adapter und die Konsole jeweils zum weitaus überwiegenden Teil einer reinen Zugbelastung ausgesetzt sind, ist es problemlos möglich, nicht nur die Konsole, sondern auch den Adapter aus Blechmaterial kostengünstig herzustellen.

Die erfindungsgemäße Gestaltung einer Spannratsche bedingt keine grundsätzliche Umgestaltung bestehender Ratschenkonzepte, sondern lässt sich ohne Weiteres mit bestehenden Konstruktionen kombinieren.

Der Adapter kann zu diesem Zweck die Form eines Rahmens aufweisen oder durch zwei einfache, mit Abstand zueinander verlaufende Blechteile gebildet sein, die über die von ihnen getragenen, sich zwischen ihnen erstreckenden Bolzenelementen miteinander fest verbunden sind.

Bei Spannratschen, bei denen die Konsole zwei beabstandet zueinander verlaufende Schenkel aufweist, zwischen denen sich ein Befestigungselement erstreckt, kann dieses Befestigungselement dazu genutzt werden, den Adapter an der Konsole gelenkig zu befestigen. Typischerweise handelt es sich bei dem betreffenden Befestigungselement bereits um eine Schraube oder desgleichen, die an Stelle der zuvor zum Halten des einen Endes des Spanngurts verwendeten Bolzens eingesetzt wird.

Bei einer erfindungsgemäßen Spannratsche sind bevorzugt beide Bolzenelemente so ausgebildet, dass ihre Umfangsfläche jeweils über den gesamten Umfang nach außen gewölbt ist, die Bolzenelemente also eine im Wesentlichen zylindrische Form aufweisen. Dies erlaubt eine Maximierung der hinsichtlich der Selbsthemmung des um die Bolzenelemente geschlauften Endabschnitts des Spanngurts wirksamen Fläche. Gleichzeitig stellt die Zylinderform der Bolzenelemente sicher, dass bei gelockertem Spanngurt die um die Bolzenelemente geschlauften Lagen des Spanngurts mit geringem Kraftaufwand zum Nachjustieren verschoben werden können.

Der im verspannten Zustand bewirkte Halt der Spanngurts an den Bolzenelementen kann zudem dadurch unterstützt werden, dass beide Bolzen mit einer Oberflächenstruktur versehen sind, die bei um die Bolzenelemente geschlauftem Spanngurt in reib- oder formschlüssiger Verbindung mit dem Spanngurt steht. Überraschend hat sich herausgestellt, dass die im Stand der Technik noch für eine ausreichende Klemmung für erforderlich gehaltenen zusätzlichen Maßnahmen, wie eine besondere Formgebung oder eine Beweglichkeit eines der Bolzenelemente, tatsächlich nicht benötigt werden, wenn der Spanngurt über eine ausreichend große Länge um die Bolzenelemente gelegt wird und durch eine entsprechende Oberflächenstrukturierung der Bolzenelemente sichergestellt ist, dass unter der mittels der Spannratsche erzeugten Spannung eine hohe, optimaler Weise bis zum Formschluss gehende Reibschlussverbindung zwischen der Umfangsfläche der Bolzenelemente und der jeweils auf ihr liegenden Lage des Spanngurts hergestellt ist.

Die auf den Umfangsflächen der Bolzenelemente vorgesehene Oberflächenstruktur kann durch eine einfache Aufrauung gebildet sein, bei der an der Umfangsfläche der Bolzenelemente mehr oder weniger zufällig verteilte Erhebungen und Vertiefungen ausreichender Höhe bzw. Tiefe ausgebildet sind. Die an den Umfangsflächen erzeugte Rauheit sollte dabei so stark sein, dass auch noch nach längerem Gebrauch und dem damit möglicherweise einhergehenden Oberflächenverschleiß im praktischen Einsatz ein ausreichender Reib- oder Formschluss von Spanngurt und Bolzenelementen gewährleistet ist.

Eine optimale Wirkung der erfindungsgemäß vorgesehenen Oberflächenstruktur der Bolzenelemente ergibt sich, wenn ihre Vorsprünge unabhängig von der Richtung wirksam sind, in welcher die zwischen dem jeweiligen Bolzen und dem darauf liegenden Spanngurt herrschenden Kräfte gerichtet sind.

Besonders sicher lässt sich diese Anforderung dadurch gewährleisten, dass die Oberflächenstruktur durch in regelmäßiger Anordnung in die Umfangsfläche der Bolzenelemente eingeformte Erhöhungen und Vertiefungen gebildet ist. Die geordnete Ausformung der Oberflächenstruktur ermöglicht eine exakte und eindeutige Kontrolle der Beschaffenheit der jeweils erzeugten Oberflächenstruktur.

Unter Berücksichtigung der Gewebestruktur der in der Praxis verwendeten Spanngurte hat es sich in diesem Zusammenhang als besonders vorteilhaft erwiesen, wenn die Erhöhungen nach Art von in radialer Richtung von der jeweiligen Umfangsfläche nach außen abstehenden Bergspitzen, insbesondere nach Art von Pyramidenspitzen oder -stümpfen, oder entsprechend vorstehenden, möglichst scharf umrandeten Bergplateaus mit dazwischen liegenden Tälern geformt sind. Derartige Oberflächen werden in der Fachsprache auch als "gekordelt" bezeichnet und sind beispielsweise durch eine rautenförmige regelmäßige Anordnung der jeweiligen Erhebungen und Vertiefungen der Oberfläche gekennzeichnet.

Nachfolgend wird die Erfindung anhand von Ausführungsbeispielen näher erläutert. Es zeigen:

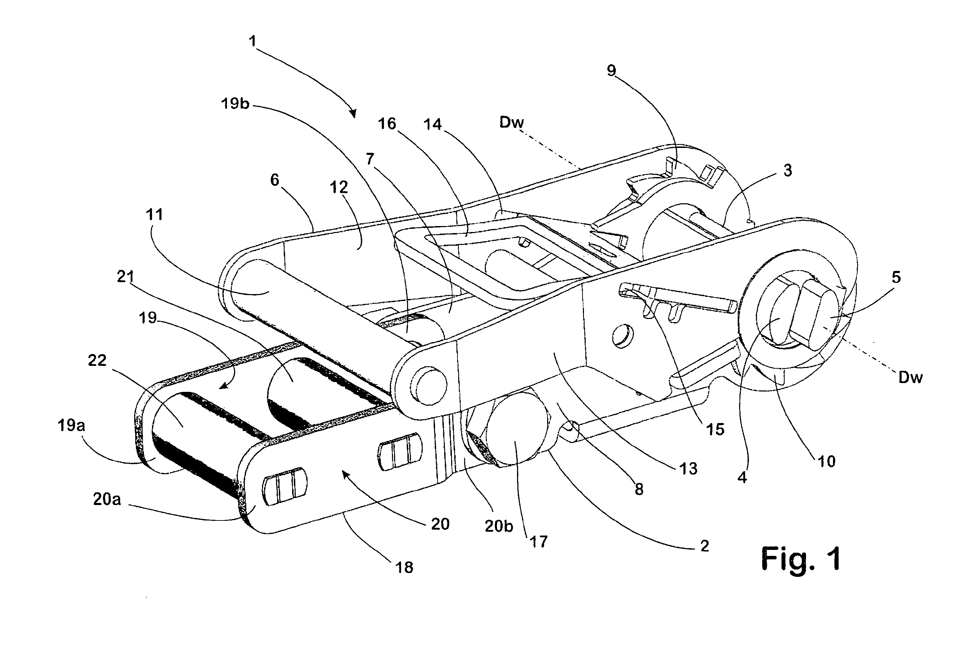

- Fig. 1: eine Spannratsche in einer perspektivischen Ansicht;
- Fig. 2: die Spannratsche gemäß Fig. 1 mit daran befestigtem Spanngurt in einem Längsschnitt;
- Fig. 3: eine erste alternative Ausgestaltung der Spannratsche in einer Fig. 2 entsprechenden Ansicht;
- Fig. 4: eine zweite alternative Ausgestaltung der Spannratsche in einer Fig. 2 entsprechenden Ansicht;
- Fig. 5: eine dritte alternative Ausgestaltung der Spannratsche in einer Fig. 2 entsprechenden Ansicht;
- Fig. 6: ein Bolzenelement in seitlicher Ansicht;
- Fig. 7: eine Oberflächenstruktur des Bolzenelements gemäß Fig. 6.

Die hinsichtlich ihrer Wickelfunktion konventionell ausgebildete Spannratsche 1 zum Spannen eines Spanngurts G weist eine Konsole 2, eine durch zwei Umlenkstege 4,5 gebildete, in der Konsole 2 drehbar gelagerte Wickelwelle 3 und einen Spannhebel 6 zum Drehen der Wickelwelle 3 um eine Drehachse Dw auf.

Bei dem Spanngurt G kann es sich beispielsweise um ein konventionelles Gurtband oder um ein durch Extrusion hergestelltes Flachband handeln.

Die Konsole 2 ist durch zwei sich parallel zueinander erstreckende Schenkelbleche 7,8 gebildet, in deren vorderen Bereich jeweils eine Lageröffnung eingeformt ist. Durch die jeweilige Lageröffnung ist die Wickelwelle 3 mit ihrem jeweils zugeordneten Endabschnitt gesteckt.

Auf die seitlich über die Schenkelbleche 7,8 der Konsole 2 hinaus stehenden Endabschnitte der Wickelwelle 3 ist jeweils ein mit der Wickelwelle 3 drehfest verbundenes Ratschenzahnrad 9,10 aufgesteckt.

Der Spannhebel 6 besitzt die Grundform eines U's, dessen Basis durch eine Handstange 11 gebildet ist, an die sich seitliche Schenkelbleche 12,13 anschließen. Im Bereich ihrer freien, die Konsole 2 seitlich umfassenden Enden weisen die Schenkelbleche 12,13 jeweils ebenfalls eine Öffnung auf, in die die Wickelwelle 3 mit ihrem jeweiligen Endabschnitt greift. Über hier nicht sichtbare Koppelelemente kann auch der Spannhebel 6 drehfest mit der Wickelwelle 3 verkoppelt werden. Im verkoppelten Zustand kann dementsprechend die Wickelwelle 3 mit den Ratschenzahnrädern durch Verschwenken des Spannhebels 6 um die Achse Dw frei gedreht werden.

In Schlitzen 14,15, die in die Schenkelbleche 7,8 der Konsole 2 zusätzlich eingeformt sind, ist ein Sperrglied 16 verschiebbar gelagert, das beispielsweise durch eine hier der Übersichtlichkeit halber nicht gezeigte Feder belastet selbsttätig so mit den Ratschenzahnrädern 9,10 verrastet, dass die Wickelwelle 3 in der jeweiligen Drehstellung gehalten ist. Durch Verschieben des Sperrglieds 16 in eine Lösestellung, in dem es sich nicht mehr im Eingriff mit den Ratschenzahnrädern 9,10 befindet, kann die Verrastung wieder gelöst werden.

Im Bereich ihres von der Lagerung der Wickelwelle 3 abgewandten Endes weisen die Schenkelbleche 7,8 der Konsole 2 ebenfalls jeweils eine Durchgangsöffnung auf. Durch diese Durchgangsöffnungen ist ein Schraubenbolzen 17 gesteckt, der einerseits dazu dient, die Schenkelbleche 7,8 in dem betreffenden Endbereich auf einem bestimmten festen Abstand zu halten, und an dem andererseits ein Adapter 18 gelagert ist.

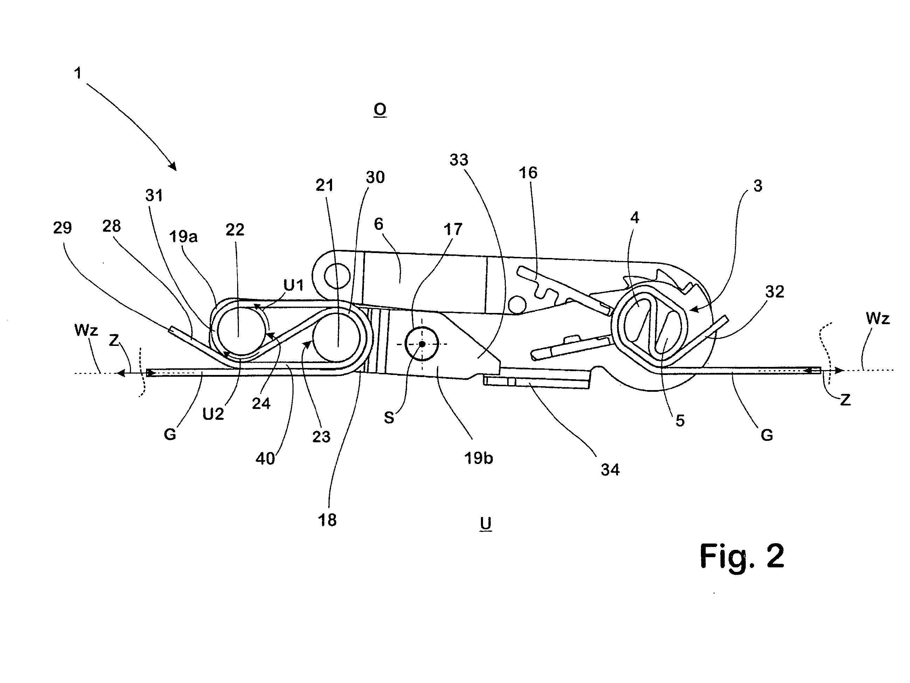

Bei jeder der in den Figuren 2 bis 5 gezeigten Varianten ist der Adapter 18 jeweils aus zwei parallel und mit Abstand zueinander ausgerichteten durch jeweils einen Blechstreifen gebildete 19,20 Schenkel und zwei Bolzenelemente 21,22 gebildet. Die Bolzenelemente 21,22 erstrecken sich zwischen den einander zugewandten flachen Seiten der Schenkel 19,20 und sind mit ihren Enden jeweils drehfest und unverlierbar in einer ihnen zugeordneten Öffnung 19,20 eingepresst. Die Schenkel 19,20 des Adapters 18 sind auf diese Weise durch die Bolzenelemente 21,22 in einem festen Abstand gehalten. Gleichzeitig halten die Schenkel 19,20 die achsparallel zueinander und zu der Wickelwelle 3 ausgerichteten Bolzenelemente 21,22 in einem ebenso definierten Abstand zueinander.

An ihren freien, der Konsole 2 zugewandten Endbereichen weisen die Schenkel 19,20 jeweils eine Lageröffnung auf, durch die der Schraubenbolzen 17 geführt ist. Die auf diese Weise mittels des Schraubenbolzens 17 bewirkte Befestigung des Adapters 18 an der Konsole 2 ist dabei jeweils gelenkig ausgebildet, indem der zylindrische Schaftabschnitt des Schraubenbolzens 17 eine Schwenkachse S bildet, an der der Adapter 18 über seine den Schraubenbolzen 17 aufnehmenden Lageröffnungen schwenkbeweglich gelagert ist.

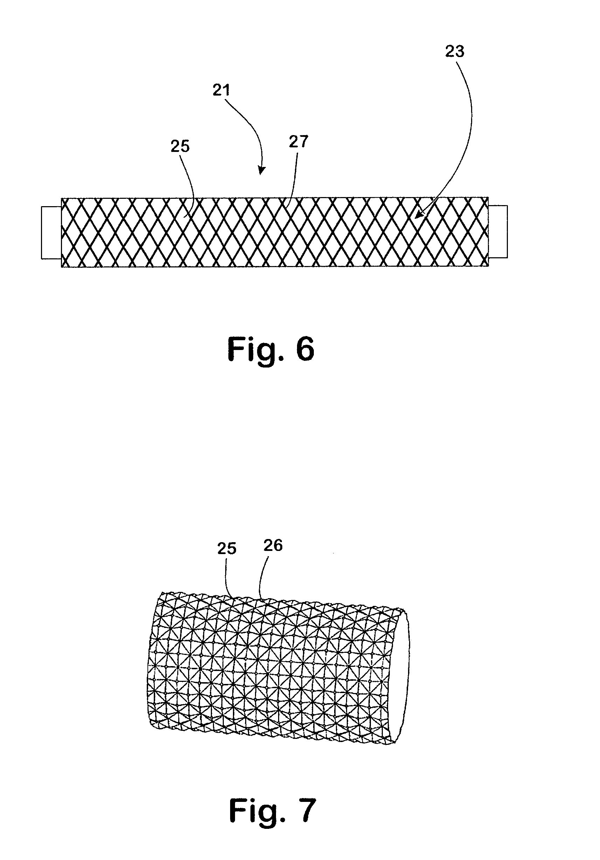

Zwischen den Schenkeln 19,20 weisen die dort gleichmäßig nach außen gewölbten Umfangsflächen 23,24 der in diesem Bereich zylindrischen Bolzenelemente 21,22 eine raue, gekordelte Oberflächenstruktur auf, die, wie in Fig. 6 und 7 angedeutet, durch gleichmäßig angeordnete pyramidenförmige Erhebungen 25 gekennzeichnet ist, zwischen denen jeweils schmale kerbenartige Täler 26 in die jeweilige Umfangsfläche eingeprägt sind. Die so geformte Oberflächenstruktur wird vor der Montage des Adapters 18 maschinell in die jeweilige Umfangsfläche eingeprägt. Ihre Erhebungen stehen gleichmäßig in radialer Richtung vor, so dass sie unabhängig davon, in welcher Umfangsrichtung U1, U2 die jeweilige Spann- bzw. Reibkraft wirkt, gleich wirksam sind.

Bei jeder der in den Figuren 2 bis 5 dargestellten Variante der Spannratsche 1 umfassen die einstückig aus Stahlblech geformten Schenkel 19,20 des Adapters 18 jeweils einen die Bolzenelemente 21,22 tragenden Tragabschnitt 19a,20a und einen daran angeschlossenen Verbindungsabschnitt 19b,20b auf. Die Lageröffnungen für den Schraubenbolzen 17 sind dabei jeweils in den freien Endbereich der Verbindungsabschnitte 19b,20b eingeformt. Dabei sind die Verbindungsabschnitte 19b,20b ausgehend von den Tragabschnitten 19a,20a seitlich gegeneinander gerichtet so weit verkröpft, dass ihre mit den Lageröffnungen versehenen Endbereiche an der ihnen jeweils zugeordneten Seitenfläche der einander zugewandten Innenseiten der Schenkelbleche 7,8 der Konsole 2 anliegen.

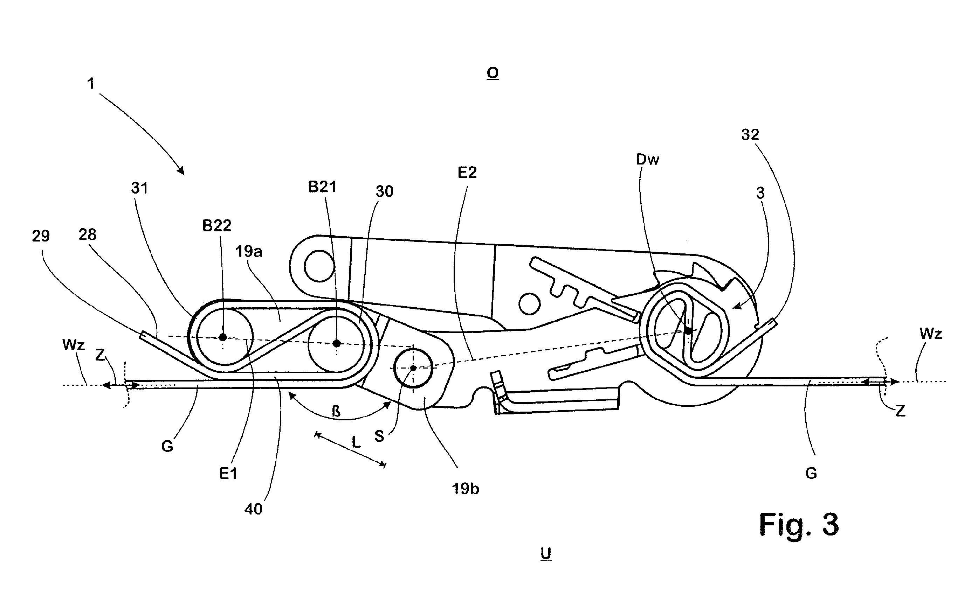

Mit seinem dem Adapter 18 zugeordneten Endabschnitt 28 wird der Spanngurt G jeweils in den Adapter 18 bzw. seine Bolzenelemente 21,22 eingeschlauft. Bei den in den Figuren 2 und 3 dargestellten Ausgestaltungen der Spannratsche 1 wird dazu der Spanngurt G zunächst von der Unterseite U des Adapters 18 her in den von dem Schraubenbolzen 17 und dem zu ihm benachbart angeordneten Bolzenelement 21 begrenzten Raum geführt.

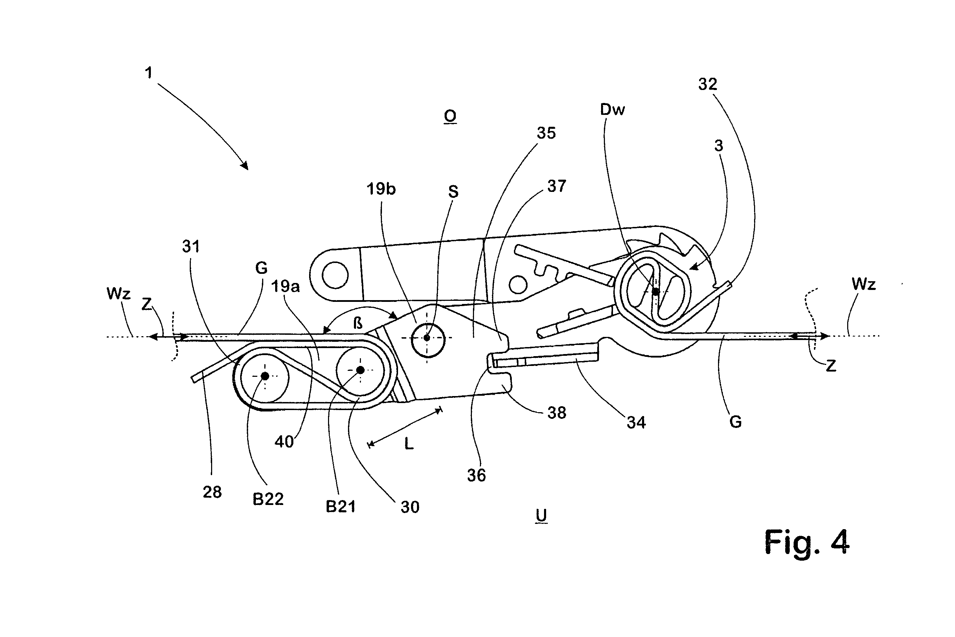

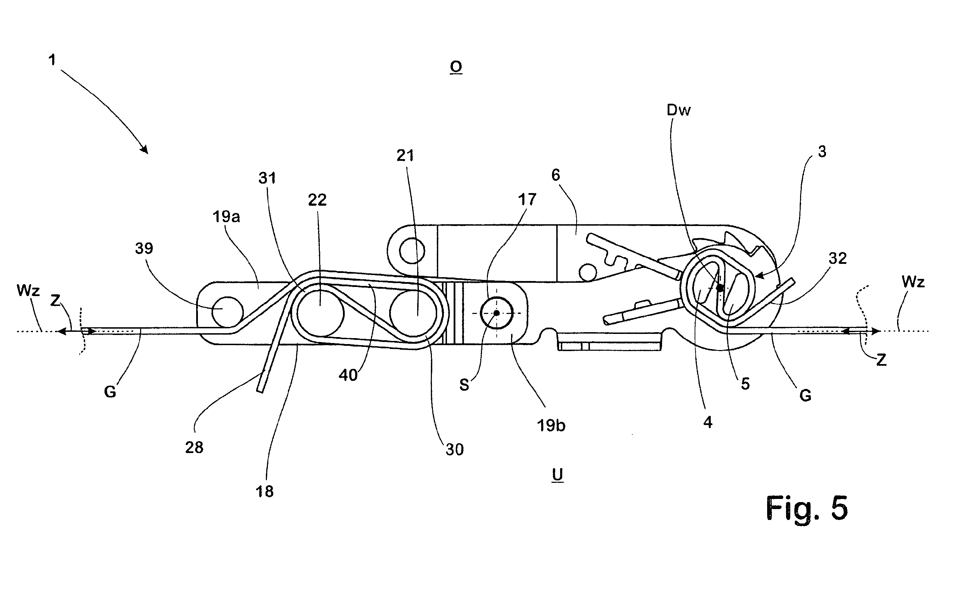

Bei den in den Figuren 4 und 5 dargestellten Varianten der Spannratsche 1 wird der Spanngurt G dagegen von der Oberseite O des Adapters 18 her in den von dem Schraubenbolzen 17 und dem zu ihm benachbart angeordneten Bolzenelement 21 begrenzten Raum geführt. Das freie Ende 29 des Endabschnitts 28 wird dabei jeweils über das zweite Bolzenelement 22 hinausstehend gehalten. Dann wird der Spanngurt G um das Bolzenelement 21 gelegt und durch den von den Bolzenelementen 21,22 begrenzten Raum geführt. Anschließend wird der Spanngurt G von unten (Figuren 2,3) bzw. oben (Figuren 4,5) her um das entfernt von der Wickelwelle 3 außen liegende Bolzenelement 22 gelegt. Daraufhin wird der Spanngurt G über seine bereits auf dem Bolzenelement 21 liegende Lage 30 zurückgeführt und durch den von dem Schraubenbolzen 17 und dem Bolzenelement 21 begrenzten Raum nach unten (Figuren 2,3) bzw. oben (Figuren 4,5) gerichtet um das Bolzenelement 21 gelegt, um schließlich in von der Wickelwelle 3 weggerichteter Richtung von dem Adapter 18 weggeführt zu werden.

Im verspannten Zustand drückt der Spanngurt G so unter Wirkung der Spannkraft Z seine um das Bolzenelement 21 gelegte Lage 30 gegen die raue Umfangsfläche 23 des Bolzenelements 21. Gleichzeitig drückt er seinen Endabschnitt 28 gegen seine um das Bolzenelement 22 gelegte Lage 31 und die betreffende Lage 31 gegen die raue Umfangsfläche 24 des Bolzenelementes 22. Auf diese Weise herrscht zwischen den Lagen 30,31 des Spanngurts G und den Bolzenelementen 21,22 Reib- und Formschluss, der einerseits im verspannten Zustand unter Wirkung der im Spanngurt G wirkenden Spannkraft Z einen sicheren Halt des eingeschlauften Endabschnitts 28 des Spanngurts G an dem Adapter 18 gewährleistet, andererseits aber bei entspanntem Spanngurt G problemlos gelöst werden kann, um die in Bezug auf die Befestigung des jeweils zu verspannenden Guts wirksame Länge des Spanngurts G durch einen Zug am freien Ende 29 des Endabschnitts 28 in seiner Länge nachzujustieren.

Zum Befestigen eines hier nicht gezeigten Gutes wird der mit seinem einen Endabschnitt 28 mit dem Adapter 18 bereits verbundene Spanngurt G um das betreffende Gut gelegt. Anschließend wird der bis dahin freie andere Endabschnitt 32 des Spanngurts G in den von den Umlenkstegen 4,5 der Wickelwelle 3 begrenzen Schlitz gesteckt und in an sich bekannter Weise so um die Umlenkstege 4,5 gelegt, dass er bei verspanntem Spanngurt G durch die auf ihm liegenden Lagen des Spanngurts G gegen die Umlenkstege 4,5 gedrückt und dort reibschlüssig gehalten wird. Um die erforderliche Spannkraft Z zu erzeugen, wird die Wickelwelle 3 durch Betätigung des Spannhebels 6 gedreht, so dass der Spanngurt G auf die Wickelwelle 3 gewickelt wird, bis er ausreichend straff gespannt ist und eine ausreichend hohe Zugkraft Z in dem Spanngurt G wirkt.

Bei der in Fig. 2 gezeigten Ausführung der Spannratsche 1 sind die Schenkel 19,20 des Adapters 18 jeweils langgestreckt ausgebildet, so dass die Mittelachsen ihrer jeweiligen Trag- 19a,20a und Verbindungsabschnitte 19b,20b jeweils gemeinsam in einer Ebene angeordnet sind. Die Verbindungsabschnitte 19b weisen dabei jeweils einen über ihre Lageröffnung in Richtung der Wickelwelle 3 hinausstehenden Stützabschnitt 33 auf, der an seinem freien, der Wickelwelle 3 zugeordneten Ende nach Art eines Nockens geformt ist. Dieser Stützabschnitt 33 wirkt mit einem Anschlag 34 zusammen, der sich achsparallel zu der Wickelwelle 3 zwischen den Schenkelblechen 7,8 der Konsole 2 erstreckt.

Der Stützabschnitt 33, die Position der Schwenkachse S und die Lage des Anschlags 34 sind dabei so aneinander angepasst, dass der Adapter 18 unter Wirkung der Spannkraft Z, die über den zuerst an dem der Wickelwelle 3 zugeordneten Bolzenelement 21 angreifenden Spanngurt G in den Adapter 18 eingeleitet wird, um die Schwenkachse S verschwenkt wird, bis sich die jeweiligen Stützabschnitte 33 der Schenkel 19,20 gegen den Anschlag 34 abstützen.

Auf diese Weise nimmt der Adapter 18 bei verspannter Spannratsche 1 unter Wirkung der Spannkraft Z eine Position ein, in der die Wirklinien Wz der an der Wickelwelle 3 und den Adapter 18 jeweils angreifenden, gegeneinander gerichteten Kräfte Z fluchtend ausgerichtet sind. Gleichzeitig ist der Adapter 18 in Bezug auf die Konsole 2 so ausgerichtet, dass der vom Adapter 18 weggeführte Spanngurt G vollständig auf der sich zwischen den Bolzenelementen 21,22 erstreckenden, in die Lage 30 übergehende und auf der Lage 31 aufliegenden Lage 40 des Endabschnitts 28 des Spanngurts G aufliegt und eine maximale Überdeckung des Spanngurts G mit den in den Adapter 18 eingeschlauften Lagen 30,31,40 seines Endabschnitts 28 gewährleistet ist. Der Anschlag 34 stützt dabei den Adapter 18 gegen das um die Schwenkachse S wirksame Moment ab, das die Spannkraft Z über den zuerst an das Bolzenelement 21 angreifenden Spanngurt G auf den Adapter 18 ausübt.

Bei der in Fig. 3 dargestellten Variante tritt dieses Moment nicht mehr auf. Dies ist dadurch erreicht worden, dass bei der in den Figuren 2 bis 5 gewählten, in eine Normalebene (Zeichenebene) zur Schwenkachse S projizierten Längsschnittansicht die Verbindungsabschnitte 19b,20b der unter einem stumpfen Winkel ß zu den Tragabschnitten 19a,20a der Schenkel 19,20 des Adapters 18 angeordnet sind. Auf diese Weise liegen die Achsen B21,B22 der Bolzenelemente 21,22 in einer Ebene E1, die in Richtung der Oberseite O der Spannratsche 1 oberhalb der Schwenkachse S liegt und die durch die Schwenkachse S und die Drehachse Dw der Wickelwelle 3 verlaufende Ebene E2 unter einem Winkel schneidet. Der von den Tragabschnitten 19a,20a und den Verbindungsabschnitten 19b,20b eingeschlossene Winkel β sowie die Länge L der Verbindungsabschnitte 19b,20b ist dabei so bemessen, dass unter Wirkung der nach dem Spannen des Spanngurtes mittels der Spannratsche 1 herrschenden Zugspannung Z der Adapter 18 selbsttätig eine Position einnimmt, in der der vom Adapter 18 abgehende Spanngurt G und dessen von der Wickelwelle 3 abgehender Abschnitt einerseits fluchtend zueinander ausgerichtet sind und andererseits der vom Adapter 18 abgehende Spanngurt G an der sich zwischen den Bolzenelementen 21,22 erstreckenden Lage 40 des Endabschnitts 28 des Spanngurts G dicht anliegt. Im Ergebnis wird so auch bei dieser Ausführung der Spannratsche 1 eine maximale Überdeckung der in dem Adapter 18 aufeinander liegenden Lagen 30,31,40 des Endabschnitts 28 des Spanngurts G und ein dementsprechend sicherer Halt des Spanngurts G gewährleistet.

Auf demselben Prinzip wie die in Fig. 3 dargestellte Variante basiert die in Fig. 4 gezeigte Ausgestaltung der Spannratsche 1. Bei dieser Ausgestaltung ist der von den Tragabschnitten 19a,20a und den Verbindungsabschnitten 19b,20b eingeschlossene Winkel ß sowie die Länge L der Verbindungsabschnitte 19b,20b so bemessen, dass unter Wirkung der Zugspannung Z der Adapter 18 selbsttätig eine Position einnimmt, in der der vom Adapter 18 abgehende Abschnitt des Spanngurts G und dessen von der Wickelwelle 3 abgehender Abschnitt sowie damit einhergehend die Wirklinien Wz der auf den Adapter 18 und die Wickelwelle 3 wirkenden Zugkräfte Z im Wesentlichen fluchtend zueinander ausgerichtet sind und der von dem Adapter 18 weggeführte Spanngurt G vollflächig auf der sich zwischen den Bolzenelementen 21,22 erstreckenden Lage 40 des Endabschnitts 28 aufliegt.

Im Unterschied zur in Fig. 3 gezeigten Variante sind bei der Ausgestaltung gemäß Fig. 4 die Verbindungsabschnitte 19b,20b in Bezug zu den Tragabschnitten 19a,20a der Schenkel 19,20 so unter einem stumpfen Winkel β ausgerichtet, dass die Achsen B2l,B22 der Bolzenelemente 21,22 in Richtung der Unterseite U versetzt zur Schwenkachse S angeordnet sind. Um die Handhabung beim Einschlaufen des dem Adapter 18 zugeordneten Endabschnitts 28 des Spanngurts G zu vereinfachen, ist zudem am freien über die Schwenkachse S in Richtung der Wickelwelle 3 hinausragenden Ende ein Stützabschnitt 35 ausgebildet.

In den Stützabschnitt 35 ist eine Ausnehmung 36 eingeformt, in der der Anschlag 34 mit seinem der Schwenkachse S zugeordneten Randbereich mit großem Spiel sitzt. Der Schwenkbereich des Adapters 18 um die Schwenkachse S ist auf diese Weise durch die die Ausnehmung 36 nach oben und unten begrenzenden Endabschnitte 37,38 des Stützabschnitts 35 limitiert, so dass der Adapter 18 bei nicht wirksamer Zugkraft Z relativ zur Konsole lose in einer Position gehalten ist, in der ein Einschlaufen des Spanngurts G problemlos vorgenommen werden kann. Das im Bereich der Ausnehmung 36 vorhandene Spiel ist dabei gleichzeitig so bemessen, dass bei unter Wirkung der Zugspannung Z ausgerichtetem Adapter 18 kein Kontakt zwischen dem Stützabschnitt 35 und dem Anschlag 34 besteht, die Konsole 2 also frei von einer von dem Adapter 18 ausgehenden Momentenbelastung ist.

Wie bei der in Fig. 2 dargestellten Ausführungsform der Spannratsche 1 sind bei dem in Fig. 5 gezeigten Beispiel die Schenkel 19,20 des Adapters 18 jeweils langgestreckt ausgebildet, so dass die Mittelachsen ihrer jeweiligen Trag- 19a,20a und Verbindungsabschnitte 19b,20b jeweils gemeinsam in einer Ebene angeordnet sind. Um auch bei dieser Ausführung die Konsole 2 unter Wirkung der Zugkraft Z frei von von dem Adapter 18 ausgehenden Momentenbelastungen zu halten und gleichzeitig eine optimale Umschlingung des in den Adapter 18 eingeschlauften Endabschnitts 18 des Spanngurts zu gewährleisten, sind hier die Tragabschnitte 19a,20a der Schenkel 19,20 über das außen angeordnete Bolzenelement 22 hinaus verlängert und tragen dort einen Stützbolzen 39, der sich achsparallel zu den Bolzenelementen 21,22 zwischen den Schenkeln 19,20 erstreckt. Beim Einschlaufen des Endabschnitts 28 in den Adapter 18 wird der von dem Adapter 18 weggeführte Spanngurt G, nachdem er von oben auf seine bereits auf den Bolzenelementen 21,22 liegenden Lagen gelegt ist, von oben durch den von dem äußeren Bolzenelement 22 und dem Stützbolzen 39 begrenzten Raum geführt. Unter der nach dem Verspannen des Spanngurtes G mittels der Spannratsche 1 herrschenden Zugkraft Z legt sich der Spanngurt von unten gegen den Stützbolzen 39. Es ergibt sich somit um die Schwenkachse S ein Moment, das dem Moment entgegengerichtet ist, das in Folge der Umlenkung des Spanngurtes G an dem innenliegenden Bolzenelement 21 entsteht. Unter der Zugkraft Z richtet sich der Adapter 18 dementsprechend ebenfalls selbsttätig so aus, dass die Wirklinie Wz der auf den Adapter 18 und die Wickelwelle 3 wirkenden Zugkraft Z fluchtend zueinander ausgerichtet sind. Der Stützbolzen 39 gewährleistet dabei, dass der vom Adapter 18 weggeführte Spanngurt G auf der sich zwischen den Bolzenelementen 21,22 erstreckenden Lage 40 des Endabschnitts 28 aufliegt und so eine maximale Überdeckung der im Bereich des Adapters 18 aufeinander liegenden Lagen und ein dementsprechend sicherer Halt des Spanngurts G gesichert ist.

| **BEZUGSZEICHEN** | |
|---|---|
| 1 | Spannratsche zum Spannen des Spanngurts G |
| 2 | Konsole |
| 3 | Wickelwelle |
| 4,5 | Umlenkstege der Wickelwelle |
| 6 | Spannhebel |
| 7,8 | Schenkelbleche der Konsole 2 |
| 9,10 | Ratschenzahnräder |
| 11 | Handstange des Spannhebels 6 |
| 12,13 | Schenkelbleche des Spannhebels 6 |
| 14,15 | Schlitze der Schenkelbleche 7,8 |
| 16 | Sperrglied |
| 17 | Schraubenbolzen |
| 18 | Adapter |
| 19,20 | Schenkel des Adapters 18 |
| 19a,20a | Tragabschnitte der Schenkel 19,20 |
| 19b,20b | Verbindungsabschnitte der Schenkel 19,20 |
| 21,22 | Bolzenelemente des Adapters 18 |
| 23,24 | Umfangsflächen der Befestigungsbolzen 21,22 |
| 25 | Erhebungen der Umfangsflächen 23,24 |
| 26 | Täler der Umfangsflächen 23,24 |
| 28 | in den Adapter 18 eingeschlaufter Endabschnitt des Spanngurts G |
| 29 | freies Ende des Endabschnitts 28 |
| 30 | um den Befestigungsbolzen 21 gelegte Lage des Endabschnitts 28 des Spanngurts G |
| 31 | um den Befestigungsbolzen 22 gelegte Lage des Endabschnitts 28 des Spanngurts G |
| 32 | der Wickelwelle 3 zugeordneter Endabschnitt des Spanngurts G |
| 33 | Stützabschnitt |
| 34 | Anschlag |
| 35 | Stützabschnitt |
| 36 | Ausnehmung |
| 37,38 | Endabschnitte des Stützabschnitts 35 |
| 39 | Stützbolzen |
| 40 | sich zwischen den Bolzenelementen 21,22 erstreckende Lage des Endabschnitts 28 des Spanngurts G |
| ß | Winkel |
| Dw | Drehachse der Wickelwelle 3 |
| G | Spanngurt |
| U1,U2 | Umfangsrichtungen |
| S | Schwenkachse |
| Wz | Wirklinie |
| B21, B22 | Achsen der Bolzenelemente 21,22 |
| O | Oberseite der Spannratsche 1 |
| U | Unterseite der Spannratsche 1 |
| E1,E2 | Ebenen |
| L | Länge der Verbindungsabschnitte 19b,20b |

## Patentansprüche

1. Spannratsche zum Spannen eines Spanngurts (G), mit einer Konsole, mit einer in der Konsole (2) drehbar gelagerten Wickelwelle (3) zum Aufwickeln des mit seinem einen Endabschnitt (32) mit der Wickelwelle (3) verbindbaren Spanngurts (G), mit einem Spannhebel (6) zum Drehen der Wickelwelle (3) um eine Drehachse (Dw) und mit zwei parallel und beabstandet zueinander an der Konsole (2) angeordneten, in einem festen Abstand zueinander und achsparallel zur Wickelwelle positionierten Bolzenelementen (21,22), um die der ihnen zugeordnete Endabschnitt (28) des Spanngurts (G) schlaufbar ist, **dadurch**
**gekennzeichnet, dass** ein Adapter (18) vorgesehen ist, der um eine achsparallel zur Wickelwelle (3) ausgerichtete Schwenkachse (S) verschwenkbar mit der Konsole (2) verbunden ist, wobei der Adapter (18) und die Konsole (2) hinsichtlich der um die Schwenkachse (S) der gelenkigen Verbindung wirksamen Momente voneinander entkoppelt sind und der Adapter (18) die Bolzenelemente (21,22) trägt.

2. Spannratsche nach Anspruch 1, **dadurch gekennzeichnet, dass** der Adapter (18) einen Verbindungsabschnitt (19b,20b), über den der Adapter (18) mit der Konsole (2) verkoppelt ist, und einen Tragabschnitt (19a,20a) aufweist, an dem die Bolzenelemente (21,22) befestigt sind, und dass der Verbindungsabschnitt (19b,20b) und der Tragabschnitt (19a,20a) so zueinander angewinkelt ausgerichtet sind, dass die Ebene (E1), in der die Achsen (B21,B22) der Bolzenelemente (21,22) gemeinsam liegen, sich von der Ebene (E2) unterscheidet, in der die Schwenkachse (S) des Adapters (18) und die Drehachse (Dw) der Wickelwelle (3) gemeinsam liegen.

3. Spannratsche nach Anspruch 2, **dadurch gekennzeichnet, dass** der Verbindungsabschnitt (19b,20b) und der Tragabschnitt (19a,20a) des Adapters (18) in einer Projektion auf eine Normalebene zur Schwenkachse (S) des Adapters (18) gesehen einen stumpfen Winkel (β) einschließen.

4. Spannratsche nach einem der voranstehenden Ansprüche, **dadurch gekennzeichnet, dass** an der Konsole (2) ein Anschlag (34) vorgesehen ist, der den Schwenkbereich des Adapters (18) begrenzt.

5. Spannratsche nach einem der voranstehenden Ansprüche, **dadurch**
**gekennzeichnet, dass** an dem von der Schwenkachse (S) abgewandten Ende des Adapters (18) ein Stützbolzen (39) vorgesehen ist, der sich achsparallel zu den Bolzenelementen (21,22) erstreckt und mit der Schwenkachse (S) den Raum seitlich begrenzt, in dem die Bolzenelemente (21,22) angeordnet sind.

6. Spannratsche nach einem der voranstehenden Ansprüche, **dadurch**
**gekennzeichnet, dass** der Adapter (18) aus einem Blechmaterial hergestellt ist.

7. Spannratsche nach einem der voranstehenden Ansprüche, **dadurch**
**gekennzeichnet, dass** die Konsole (2) aus einem Blechmaterial gebildet ist.

8. Spannratsche nach einem der voranstehenden Ansprüche, **dadurch gekennzeichnet, dass** die Umfangsfläche (23,24) der Bolzenelemente (21,22) mit einer Oberflächenstruktur versehen ist, die bei um die Bolzenelemente (21,22) geschlauftem Spanngurt (G) in reib- oder formschlüssiger Verbindung mit dem Spanngurt (G) steht.

9. Spannratsche nach Anspruch 8, **dadurch gekennzeichnet, dass** die Oberflächenstruktur durch eine Aufrauung der Umfangsfläche (23,24) der Bolzenelemente (21,22) gebildet ist.

10. Spannratsche nach Anspruch 9, **dadurch gekennzeichnet, dass** die Oberflächenstruktur durch in regelmäßiger Anordnung in die Umfangsfläche (23,24) der Bolzenelemente (21,22) eingeformte Erhöhungen (25) und Vertiefungen (26) gebildet ist.

11. Spannratsche nach Anspruch 10, **dadurch gekennzeichnet, dass** die Erhöhungen (25) nach Art von in radialer Richtung von der jeweiligen Umfangsfläche abstehenden Bergen ausgebildet sind.

12. Anschlagmittel umfassend eine gemäß einem der voranstehenden Ansprüche ausgebildete Spannratsche (1) und einen Spanngurt (G), der mit seinem einen Endabschnitt (28) um die Bolzenelemente (21,22) der Spannratsche (1) geschlauft ist.

## Claims

1. Ratchet tensioner for tensioning a tension belt (G), having a console, having a winding shaft (3) which is rotatably supported in the console (2) for winding up the tension belt (G), which tension belt (G) is connectable to the winding shaft (3) with its one end section (32), having a tension lever (6) for rotating the winding shaft (3) about a rotational axis (Dw) and having two bolt elements (21, 22) arranged on the console (2) parallel to one another and spaced apart from one another and positioned at a fixed distance from one another and axially parallel to the winding shaft, around which bolt elements (21, 22) the end section (28) of the tension belt (G) assigned to them can be looped, **characterised in that** an adapter (18) is provided which is connected to the console (2) being pivotable about a pivot axis (S) which is aligned axially parallel to the winding shaft (3), wherein the adapter (18) and the console (2) are decoupled from one another in view of the torques effective about the pivot axis (S) of the articulated connection and the adapter (18) carries the bolt elements (21, 22).

2. Ratchet tensioner according to Claim 1, **characterised in that** the adapter (18) has a connection section (19b, 20b), via which the adapter (18) is coupled to the console (2), and a carrying section (19a, 20a), to which the bolt elements (21, 22) are fastened, and **in that** the connection section (19b, 20b) and the carrying section (19a, 20a) are aligned angled with respect to one another in such a way that the plane (E1), in which the axes (B21, B22) of the bolt elements (21, 22) jointly lie, differs from the plane (E2), in which the pivot axis (S) of the adapter (18) and the rotational axis (Dw) of the winding shaft (3) jointly lie.

3. Ratchet tensioner according to Claim 2, **characterised in that** the connection section (19b, 20b) and the carrying section (19a, 20a) of the adapter (18) seen in a projection onto a normal plane with respect to the pivot axis (S) of the adapter (18) enclose an obtuse angle (β).

4. Ratchet tensioner according to any one of the preceding claims, **characterised in that** a stop (34) which delimits the pivot area of the adapter (18) is provided on the console (2).

5. Ratchet tensioner according to any one of the preceding claims, **characterised in that** a support bolt (39) is provided on the end of the adapter (18) facing away from the pivot axis (S), which support bolt (39) extends axially parallel to the bolt elements (21, 22) and, together with the pivot axis (S), laterally delimits the space in which the bolt elements (21, 22) are arranged.

6. Ratchet tensioner according to any one of the preceding claims, **characterised in that** the adapter (18) is produced from a sheet metal material.

7. Ratchet tensioner according to any one of the preceding claims, **characterised in that** the console (2) is formed from a sheet metal material.

8. Ratchet tensioner according to any one of the preceding claims, **characterised in that** peripheral surface (23, 24) of the bolt elements (21, 22) is provided with a surface structure which when the tension belt (G) is looped around the bolt elements (21, 22) is in frictional or form-fit connection with the tension belt (G).

9. Ratchet tensioner according to Claim 8, **characterised in that** the surface structure is formed by a roughening of the peripheral surface (23, 24) of the bolt elements (21, 22).

10. Ratchet tensioner according to Claim 9, **characterised in that** the surface structure is formed by elevations (25) and depressions (26) formed in regular arrangement into the peripheral surface (23, 24) of the bolt elements (21, 22).

11. Ratchet tensioner according to Claim 10, **characterised in that** the elevations (25) are formed like hills projecting in the radial direction from the respective peripheral surface.

12. Lifting tackle comprising a ratchet tensioner (1), designed according to any one of the previous claims, and a tension belt (G) which is looped with its one end section (28) around the bolt elements (21, 22) of the ratchet tensioner (1).

## Revendications

1. Tendeur cliquet pour tendre une sangle de serrage (G), lequel est doté d'une base, d'un arbre d'enroulement (3) monté à rotation dans la base (2) et destiné à l'enroulement de la sangle de serrage (G), qui, à l'une de ses extrémités (32), peut être reliée à l'arbre d'enroulement (3), d'un levier tendeur (6), qui est destiné à faire tourner l'arbre d'enroulement (3) autour d'un l'axe de rotation (Dw), et de deux éléments rn forme d'axes (21, 22), qui, disposés sur la base (2), parallèlement, à distance l'un de l'autre, sont positionnés, à un intervalle fixe l'un de l'autre, parallèlement à l'arbre d'enroulement, et autour desquels la section d'extrémité (28) de la sangle de serrage (G) peut être enroulée en forme de boucle,
**caractérisé en ce qu'**est prévu un adaptateur (18), qui est relié à la base (2), à pivotement autour d'un axe de pivotement (S), orienté parallèlement à l'axe de l'arbre d'enroulement (3), sachant que l'adaptateur (18) et la base (2) sont découplés l'un de l'autre en ce qui concerne les moments s'exerçant autour de l'axe de pivotement (S) de la liaison articulée, et que l'adaptateur (18) porte les éléments en forme d'axes (21, 22).

2. Tendeur cliquet selon la revendication 1, **caractérisé en ce que** l'adaptateur (18) est doté d'une section de liaison (19b, 20b), par l'intermédiaire de laquelle ledit adaptateur (18) est couplé avec la base (2), et d'une section de support (19a, 20a), sur laquelle les éléments en forme d'axes (21, 22) sont fixés, et que la section de liaison (19b, 20b) et la section de support (19a, 20a) sont orientées l'une par rapport à l'autre sous un angle tel que le plan (E1), sur lequel les axes (B21, B22) des éléments en forme d'axes (21, 22) sont situés en commun, diffère du plan (E2), sur lequel l'axe de pivotement (S) de l'adaptateur (18) et l'axe de rotation (Dw) de l'arbre d'enroulement (3) sont situés en commun.

3. Tendeur cliquet selon la revendication 2, **caractérisé en ce que** la section de liaison (19b, 20b) et la section de support (19a, 19a) de l'adaptateur (18), vues en projection sur un plan normal par rapport à l'axe de pivotement (S) de l'adaptateur (18), forment un angle obtus (β).

4. Tendeur cliquet selon l'une des revendications précédentes, **caractérisé en ce que**, sur la base (2), est prévue une butée (34), qui limite le champ de pivotement de l'adaptateur (18).

5. Tendeur cliquet selon l'une des revendications précédentes, **caractérisé en ce que**, à l'extrémité de l'adaptateur (18) opposée à l'axe de pivotement (S), est prévue une tige de support (39), qui s'étend parallèlement à l'axe des éléments en forme d'axes (21, 22) et limite latéralement, avec l'axe de pivotement (S), l'espace dans lequel sont logés les éléments en forme d'axes (21, 22).

6. Tendeur cliquet selon l'une des revendications précédentes, **caractérisé en ce que** l'adaptateur (18) est fabriqué en tôle.

7. Tendeur cliquet selon l'une des revendications précédentes, **caractérisé en ce que** la base (2) est fabriquée en tôle.

8. Tendeur cliquet selon l'une des revendications précédentes, **caractérisé en ce que** la face périphérique (23, 24) des éléments en forme d'axes (21, 22) est dotée d'une structure superficielle, qui est reliée par friction et par emboîtement à la sangle de serrage (G), quand la sangle de serrage (G) est bouclée autour des éléments en forme d'axes (21, 22).

9. Tendeur cliquet selon la revendication 8, caractérisé en ce qua la structure de la surface est formée par un grattage de la face périphérique (23, 24) des éléments en forme d'axes (21, 22).

10. Tendeur cliquet selon la revendication 9, **caractérisé en ce que** la structure de la surface est formée par des bosses (25) et des cavités (26), qui sont formés, en agencement régulier, dans la face périphérique (23, 24) des éléments en forme d'axes (21, 22).

11. Tendeur cliquet selon la revendication 10, **caractérisé en ce que** les bosses (25) sont formées à la façon de monticules, qui sont en saillie de la surface périphérique respective, dans la direction radiale.

12. Accessoire d'élingage comprenant un tendeur cliquet (1), qui est conçu selon l'une des revendications précédentes et une sangle de tension (G), qui est bouclée, avec sa section d'extrémité (28), autour des éléments en forme d'axes (21, 22) du tendeur cliquet (1).
